# FASCICULE DE BREVET EUROPEEN

(11) **EP 3 430 736 B1**
(45) Date de publication et mention de la délivrance du brevet: **01.01.2020**
(21) Numéro de dépôt: 17713744.5
(22) Date de dépôt: 09.03.2017
(51) Int. Cl.: H04B 10/2507, H04B 10/2581, G02B 26/06

(54) **DISPOSITIF DE COMMUNICATIONS PAR FIBRE OPTIQUE MULTIMODE AVEC COMPOSANT DE COMPENSATION DE DISPERSION MODALE**
MULTIMODALE FASEROPTISCHE KOMMUNIKATIONSVORRICHTUNG MIT EINER KOMPONENTE ZUR MODALEN DISPERSIONSKOMPENSATION
MULTIMODE OPTICAL FIBER COMMUNICATION DEVICE COMPRISING A COMPONENT FOR MODAL DISPERSION COMPENSATION

(30) Priorité: 15.03.2016 FR 1652142
(43) Date de publication de la demande: 23.01.2019
(73) Titulaire: Cailabs, 35000 Rennes (FR)
(72) Inventeur: MORIZUR, Jean-François, 35000 Rennes (FR); BARRE, Nicolas, 35700 Rennes (FR)
(74) Mandataire: IP Trust
(86) Numéro de dépôt international: PCT/FR2017/050530
(87) Numéro de publication internationale: WO 2017/158261

(56) Documents cités:
- FR-A1- 3 016 973
- US-A- 3 759 590
- US-A- 3 832 030
- US-A- 4 050 782
- JEAN-FRANÇOIS MORIZUR ET AL: "Programmable unitary spatial mode manipulation", JOURNAL OF THE OPTICAL SOCIETY OF AMERICA A, vol. 27, no. 11, 1 novembre 2010 (2010-11-01), pages 2524-31, XP055000594, ISSN: 1084-7529, DOI: 10.1364/JOSAA.27.002524 cité dans la demande

## Description

L'invention concerne les communications par fibres optiques.

Dans beaucoup de réseaux de communication utilisant des fibres optiques qui transmettent des informations numériques par modulation d'amplitude d'un faisceau lumineux, en général en lumière infrarouge, on utilise des fibres optiques dites multimodes. A l'inverse des fibres monomodes qui ont un très petit diamètre de cœur et qui propagent la lumière dans un seul mode qui est le mode fondamental, les fibres multimodes ont un diamètre de cœur plus grand et peuvent propager la lumière simultanément dans plusieurs modes de propagation. Les modes de propagation excités dans la fibre sont caractérisés par des profils spatiaux de phase et d'intensité de champ électrique dans un plan transverse à l'axe de propagation ; ces profils sont différents selon les modes et plusieurs modes peuvent coexister. Les fibres multimodes sont avantageuses parce qu'elles peuvent transmettre plus d'énergie qu'une fibre monomode lorsque le faisceau appliqué à l'entrée présente plusieurs modes ; une fibre monomode éliminerait purement et simplement l'énergie amenée dans les modes autres que le mode fondamental. Par ailleurs, les fibres multimodes sont plus faciles à connecter entre elles ou avec d'autres composants, notamment les sources et les récepteurs, en raison du plus grand diamètre de leur coeur : les tolérances de positionnement latéral et d'alignement angulaire sont plus souples. Ces fibres sont compatibles avec celles des sources de rayonnement laser qui sont elles-mêmes multimodes, comme les diodes laser semiconductrices à émission de surface et à cavité verticale (VCSEL) qui sont les sources les plus faciles à fabriquer industriellement.

Mais les fibres multimodes ont un inconvénient qui est la dispersion modale : plusieurs modes peuvent se propager simultanément dans la fibre mais la vitesse de propagation de la lumière est différente selon le mode de propagation. Cette différence de vitesse de propagation est très faible mais elle joue un rôle non négligeable dans les fibres longues. Elle se traduit en effet, à une extrémité éloignée de la fibre, par un risque de mélange des informations numériques qui modulent en intensité un faisceau lumineux injecté à l'autre extrémité. Une impulsion lumineuse étroite injectée du côté de la source devient une impulsion étalée du côté du récepteur. Pour une fibre longue, on peut arriver à ce que qu'un bit d'information propagé par un mode lent arrive à l'extrémité de la fibre en même temps que le bit suivant propagé par un mode rapide. Le décodage des informations numériques peut devenir difficile dans le récepteur si les impulsions sont émises à haut débit et/ou si la fibre est longue. Il en résulte une bande passante limitée par la dispersion modale ; cette bande passante modale limite le débit maximum de données possible dans la fibre, en fonction de la longueur de celle-ci.

On a partiellement résolu ce problème par une conception plus sophistiquée des fibres, de sorte qu'il existe des standards de fibres multimodes (OM1, OM2, OM3, OM4) qui ont progressivement amélioré l'équilibrage des différentes vitesses de propagation en optimisant les profils d'indice du cœur de la fibre (profils à échelons d'indice, ou à gradient d'indice, ou profils plus complexes). A titre d'ordre de grandeur, le débit limite d'une fibre OM3 de 300 mètres de long est de l'ordre de 10 Gbits/seconde, mais se réduit à 1 Gbit/seconde pour une fibre de 600 mètres et à 100 Mbits/seconde pour une fibre de 2 000 mètres, ce qui devient rédhibitoire pour des centres de données géographiquement étendus et devant pourtant communiquer des informations à haut débit.

On souhaite améliorer ces débits dans des réseaux de communication déjà déployés, par exemple des réseaux d'entreprise ou des centres de données, ou dans de nouveaux réseaux. La solution consistant à changer les fibres pour les remplacer par des fibres multimodes de standard plus élevé, ou même par des fibres monomodes, est une solution coûteuse à la fois en matériel (les fibres de standards plus élevés sont plus coûteuses) et en temps d'installation pour des réseaux déjà existants.

Une solution déjà proposée pour essayer de résoudre ce problème consiste à installer des filtres de modes pour éliminer les modes qui se propagent soit le plus vite soit le plus lentement, pour ne garder que des modes qui ont des vitesses dans une gamme limitée. L'inconvénient principal est le coût de ces filtres mais surtout la perte d'énergie qui en résulte puisque les modes éliminés sont par définition des modes qui transportaient une partie de l'énergie du rayonnement. Cette perte d'énergie qui s'ajoute aux pertes naturelles dans les fibres longues rend la détection d'informations plus difficile dans le récepteur à l'extrémité de la fibre.

D'autres solutions ont pu être proposées, utilisant des traitements électroniques améliorés pour la démodulation des informations transmises, et utilisant en particulier des filtres adaptatifs. Ont été proposées également des solutions utilisant plusieurs fibres successives de propriétés différentes ou plusieurs fibres parallèles de propriétés différentes, ou même plusieurs cœurs de fibres de propriétés différentes dans une même fibre.

Ainsi, le document US4050782 propose d'utiliser un séparateur de mode optique disposé de manière adjacente à une fibre pour traiter le problème posé par la dispersion modale.

L'invention propose une solution différente pour augmenter le débit permis par une installation de communication à fibre optique multimode.

L'invention repose sur l'utilisation d'un composant optique effectuant une succession de réflexions et des passages du faisceau lumineux sur des surfaces déformées, ces passages étant suivis par des propagations non guidées du faisceau. La déformation des surfaces induit un déphasage local au sein de la section transversale du faisceau. Ainsi, un faisceau lumineux qui se propage au sein du composant subit une succession de déphasages locaux séparés par des propagations. Le faisceau lumineux subit ainsi une transformation complexe au cours de sa propagation dans le composant. Il est possible de configurer les déformations des surfaces afin de convertir un faisceau lumineux d'entrée, qui a un profil d'amplitude et de phase spécifique, en un faisceau de sortie dont le profil d'amplitude et de phase est différent. Plus encore, il est possible de trouver une configuration de surfaces déformées telles qu'une famille de faisceaux d'entrée, qui ont tous des profils d'amplitude et de phase spécifiques, soit envoyée par le composant sur une famille de faisceaux de sortie dont le profil d'amplitude et de phase est donné, sous réserve que la transformation demandée soit unitaire, c'est-à-dire qu'elle conserve l'énergie totale du faisceau. Les surfaces déformées sont réalisées dans une structure de déphasage optique qui comporte des ensembles de très petites zones élémentaires déphasantes agissant chacune sur la portion de faisceau qu'elle reçoit ; cette structure de déphasage optique est traversée par le faisceau lumineux lors de chaque trajet de réflexion entre deux miroirs, et elle peut d'ailleurs être constituée par l'un des miroirs, ou même les deux ; au cours des différents trajets le faisceau rencontre différents ensembles de zones élémentaires déphasantes et chaque ensemble respectif est configuré avec un motif de déphasages qui induit une transformation intermédiaire respective du profil spatial du faisceau. La succession des transformations intermédiaires (par exemple une dizaine de transformations successives ou même moins) établit une transformation globale du profil spatial du faisceau.

La démonstration mathématique et physique de l'existence d'une telle configuration de déformation pour toute transformation unitaire a été exposée dans l'article de Jean-François Morizur et autres, "Programmable unitary spatial mode manipulation" dans le Journal of Optical Society of America Vol 27, N° 11, Novembre 2010. La faisabilité d'un tel composant a été démontrée, ainsi que son caractère universel, à savoir la faculté de réaliser n'importe quelle transformation unitaire de profil spatial d'un faisceau lumineux cohérent.

Un tel composant a, par exemple, été proposé dans la technique antérieure pour multiplexer plusieurs faisceaux d'entrée. En effet, il est possible de considérer une famille de faisceaux d'entrée, de formes identiques mais séparés spatialement, et de se donner pour objectif de sortie une famille de faisceaux superposés dont les profils d'amplitude et de phase sont dits orthogonaux (de telle sorte que l'énergie reste conservée). L'article de Guillaume Labroille et autres, "Efficient and mode-selective spatial mode multiplexer based on multi-plane light conversion", dans Optics Express 30 juin 2014 vol 22 N°13 p 15599 explique la constitution de ce composant. Ce composant utilise deux miroirs et une structure de déphasage optique qui est traversée plusieurs fois, en différents endroits, par le faisceau lumineux au cours de ses trajets multiples entre les deux miroirs.

Selon l'invention, on ne cherche pas à réaliser une fonction de multiplexage ou démultiplexage pour recevoir plusieurs faisceaux ou pour produire plusieurs faisceaux mais on conserve une seule entrée optique pour un seul faisceau d'entrée multimode et une seule sortie pour un seul faisceau de sortie multimode. On fait subir au faisceau des transformations de profil spatial progressives au cours des multiples trajets en espace libre entre les deux miroirs, transformations qui ont pour effet de séparer le faisceau multimode en plusieurs modes ou groupes de modes ayant des vitesses de groupe différentes, avec des axes de propagation de ces groupes qui se séparent progressivement. Cette séparation se traduit par le fait que les groupes de modes séparés subissent des trajets différents entre les deux miroirs, puis un regroupement de ces trajets. Les déphasages introduits par les ensembles de zones élémentaires déphasantes de la structure de déphasage optique sont calculés pour que les parties de faisceau représentatives d'un mode ou d'un groupe de modes dont les vitesses de groupe sont dans une première gamme de valeurs subissent, du fait des déflexions qui leur sont conférées par la structure, un nombre de réflexions qui n'est pas le même que le nombre de réflexions conférées à d'autres parties du faisceau représentatives d'un autre mode ou groupe de modes ayant des vitesses de groupe dans une autre gamme de valeurs. Du fait de ce nombre de réflexions différentes, la recombinaison ultérieure des deux parties de faisceau aboutit à un faisceau multimode dans lequel les deux modes ou groupes de modes sont présents mais dans lequel le mode ou groupe de modes le plus rapide a subi un retard dû à un nombre de réflexions plus important (par exemple une ou deux réflexions de plus sur un total d'une dizaine de réflexions). Ce retard sert à compenser au moins approximativement l'avance que ce mode ou groupe de modes prend dans la fibre optique par rapport à l'autre groupe.

C'est pourquoi on revendique ici un nouveau dispositif pour compenser la dispersion modale lors de la transmission d'informations par fibre optique multimode destiné à être interposé entre une source d'un rayonnement lumineux modulé numériquement par les informations et un récepteur permettant de démoduler ces informations, le dispositif comportant une fibre optique multimode et un composant optique de modification de profil spatial de faisceau lumineux placé en amont ou en aval ou inséré en un point intermédiaire de la fibre, ce composant comportant :
- une entrée de réception d'un faisceau lumineux multimode,
- une sortie de faisceau,
- au moins deux miroirs permettant une multiple réflexion et de multiples trajets en espace libre du faisceau entre les deux miroirs,
- et une structure de déphasage optique, qui peut être l'un des miroirs et qui comporte plusieurs ensembles de multiples zones élémentaires déphasantes, les motifs de déphasages individuels introduits par les zones élémentaires déphasantes dans chaque ensemble engendrant une transformation intermédiaire du profil spatial du faisceau suite au passage du faisceau dans cet ensemble, et les transformations intermédiaires engendrées par plusieurs ensembles se combinant, au cours des passages du faisceau sur la structure de déphasage lors de multiples réflexions entre les miroirs, pour former une transformation globale, dispositif caractérisé en ce que la transformation globale comporte :
   a) d'abord une séparation du faisceau en plusieurs modes ou groupes de modes de propagation ayant des vitesses de groupe dans des gammes de valeur différentes, les déflexions engendrées par les ensembles de zones déphasantes étant telles que les parties de faisceau correspondant à un mode ou groupe de modes dont les vitesses de groupe sont dans une première gamme de valeurs subissent, du fait de ces déflexions, un nombre de réflexions sur les miroirs qui n'est pas le même que le nombre de réflexions conférées à d'autres parties du faisceau correspondant à un autre mode ou groupe de modes ayant des vitesses de groupe dans une autre gamme de valeurs,
   b) puis un regroupement des différentes parties du faisceau après ces réflexions pour diriger le faisceau vers la sortie du composant.

Les valeurs de déphasage des différentes zones d'un ensemble donné sont calculées pour obtenir les transformations intermédiaires désirées pour le profil spatial du faisceau incident sur cet ensemble de zones, et les différents ensembles établissent des configurations de déphasages correspondant aux autres transformations intermédiaires à réaliser. Ces transformations intermédiaires incluent les déflexions des parties de faisceau séparées au cours des transformations intermédiaires et recombinées ensuite.

La structure de déphasage optique peut être transmissive ou réflexive. Si elle est transmissive, elle est constituée d'une plaque transparente dont l'épaisseur est modulée zone élémentaire par zone élémentaire en fonction du déphasage à réaliser ponctuellement. Si elle est réflexive, elle est constituée de préférence par un miroir globalement plan mais à surface texturée pour établir les déphasages ponctuels désirés. Ce miroir "globalement plan" constitue alors la structure de déphasage du dispositif.

Si la structure est réflexive, ce qui est préférable, elle peut être constituée par l'un des deux miroirs. En pratique, l'un des miroirs peut être un miroir plan ou sphérique et l'autre est un miroir texturé. Les deux miroirs pourraient être des miroirs plans à surface texturée.

La structure de déphasage optique est normalement une structure figée (déphasages précalculés pour toutes les zones élémentaires de tous les ensembles de zones) et cette structure est alors réalisée par lithographie sur une lame transparente ou sur une plaque revêtue ensuite d'une couche réfléchissante telle qu'une couche d'or. La structure de déphasage pourrait cependant aussi être, dans certains cas particuliers, une structure commandée électriquement, par exemple une structure de micro-miroirs actionnés piézo-électriquement ou un réseau matriciel de cristaux liquides.

En résumé, l'invention permet d'augmenter la limite de débit d'une fibre optique multimode dans une installation existante, ou une installation à créer. Pour des installations existantes, elle est compatible avec l'architecture existante puisqu'il suffit en général de rajouter à une extrémité amont ou aval d'une fibre existante le composant optique de modification de profil spatial. Cette solution permet aussi de continuer à utiliser des fibres multimodes même dans des centres de données géographiquement étendus (plus d'un kilomètre). Elle permet de réduire les contraintes de conception des fibres optiques multimodes en évitant d'avoir comme contrainte principale la dispersion modale ; par exemple on peut optimiser d'autres propriétés de la fibre telles que les pertes en présence de courbures ou la dispersion chromatique, le composant optique étant là pour compenser la dispersion modale.

La solution selon l'invention est fortement intégrée (un seul boîtier de compensation) et est donc avantageuse de ce point de vue par rapport à des solutions qui nécessiteraient plusieurs composants et notamment des solutions qui nécessiteraient de rajouter des fibres optiques de compensation. Enfin, elle n'introduit pas de pertes significatives (par rapport à des solutions qui utiliseraient des filtres d'élimination de modes trop lents ou trop rapides).

Outre un dispositif de transmission par fibre optique, l'invention revendique également un procédé pour compenser la dispersion modale lors de la transmission d'informations par fibre optique multimode entre une source et un récepteur, caractérisé en ce qu'on insère, en amont ou en aval ou à un point intermédiaire de la fibre, un composant optique de modification de profil spatial de faisceau lumineux constitué comme indiqué précédemment et tel que la structure de déphasage induise une séparation du faisceau en plusieurs modes ou groupes de modes de propagation ayant des vitesses de groupe dans des gammes de valeur différentes, les déflexions engendrées par les ensembles de zones déphasantes étant telles que les parties de faisceau correspondant à un mode ou groupe de modes dont les vitesses de groupe sont dans une première gamme de valeurs subissent, du fait de ces déflexions, un nombre de réflexions sur les miroirs qui n'est pas le même que le nombre de réflexions conférées à d'autres parties du faisceau correspondant à un autre mode ou groupe de modes ayant des vitesses de groupe dans une autre gamme de valeurs, puis un regroupement des différentes parties du faisceau après ces réflexions pour diriger le faisceau vers la sortie du composant.

D'autres caractéristiques et avantages de l'invention apparaîtront à la lecture de la description détaillée qui suit et qui est faite en référence aux dessins annexés dans lesquels :
- la figure 1 représente des profils spatiaux classiques de modes de propagation individuels dans une fibre optique multimode ;
- la figure 2 représente schématiquement la constitution d'un exemple de composant optique de modification de profil spatial de faisceau lumineux ;
- la figure 3 représente un détail de miroir globalement plan, structuré à l'échelle de la longueur d'onde pour modifier un profil spatial de faisceau incident ;
- la figure 4 représente un schéma simplifié montrant deux trajets de faisceau correspondant à des modes de propagation différents et subissant entre les miroirs un nombre de réflexions différent avant recombinaison ;
- la figure 5 représente l'ensemble du dispositif de communication par fibre multimode ;
- la figure 6 représente un deuxième exemple de dispositif de communication ;
- la figure 7 représente un troisième exemple de dispositif de communication.

Le composant optique de modification de profil spatial qu'on va utiliser s'inspire de composants utilisés dans l'art antérieur pour effectuer des modifications de profil spatial d'un faisceau lumineux cohérent.

Pour rappel : le profil spatial d'un faisceau lumineux est un profil de distribution du champ électrique dans une section de faisceau tranversale à l'axe de propagation. C'est un profil d'amplitudes complexes d'un champ électrique qui peut être représenté en tous points de la section par une intensité et une phase. Par exemple, le profil d'intensité serait une gaussienne dans le cas d'un faisceau transmis par une fibre monomode excitée selon le mode fondamental. Le profil est évidemment plus complexe dans le cas d'un faisceau multimode et il peut se décomposer en profils spécifiques correspondant à chaque mode.

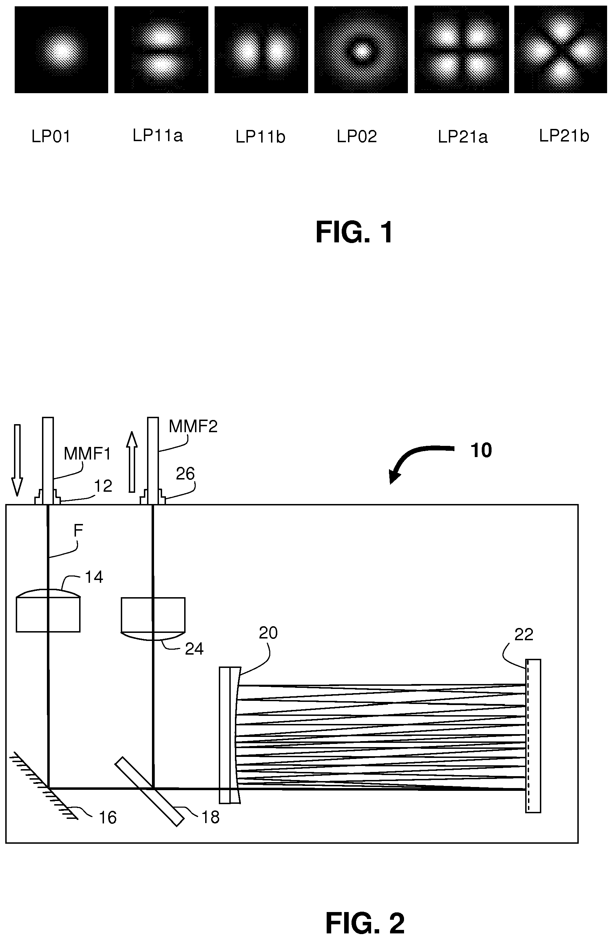

Les modes de propagation dans une fibre multimode sont couramment répertoriés dans la littérature et souvent désignés par des lettres et des chiffres qui indiquent la nature du mode et son ordre selon deux dimensions. Typiquement le mode du premier ordre ou mode fondamental est couramment désigné par l'appellation LP01 ; les modes supérieurs sont les modes LP11a, LP11b, LP21a, LP21b, LP02, LP03, LP31a, LP31b, etc. Tout faisceau se propageant dans une fibre multimode peut se décomposer sur la base des modes LP. La littérature technique donne abondamment les formes de ces profils spatiaux pour les modes les plus courants. Ces formes typiques sont illustrées sur la figure 1 pour les premiers modes LP01, LP11a, LP11b, LP02, LP21a, LP21b. Des ordres supérieurs, LP31, LP41, etc., peuvent bien sûr aussi être présents.

Le mode qui se propage le plus rapidement est le mode fondamental LP01. Les autres modes se propagent plus lentement, d'abord le mode LP11, puis les modes LP02 et LP21, et ensuite les autres modes. On peut par exemple choisir de diviser ces modes en un premier groupe comprenant seulement le mode LP01 et un deuxième groupe comprenant les modes LP11, LP02 et LP21. Ou bien on peut diviser les deux modes en un premier groupe comprenant le mode LP01 et le mode LP11 et un deuxième groupe comprenant les modes LP02 et LP21. Une division des modes de la fibre en plus de deux groupes est possible.

Dans l'article précité de JF Morizur et autres, on montre qu'il est possible de transformer les profils spatiaux d'une famille de faisceaux lumineux en n'importe quelle autre famille de profils spatiaux, sous réserve que la transformation ainsi définie conserve l'énergie, par une succession de transformations intermédiaires en espace libre (non guidé) utilisant chacune une matrice d'éléments déphaseurs agissant sur la section du faisceau lumineux qui illumine cette matrice. Dans cet article, les éléments déphaseurs sont programmables et constitués par des miroirs déformables actionnables électriquement mais le principe serait le même avec une plaque de miroirs non programmable structurée avec une configuration figée pour une transformation prédéfinie ; il serait le même aussi avec une plaque transparente programmable (cristaux liquides) ou non programmable, structurée pour introduire une matrice de déphasage sur le trajet du faisceau lumineux. On montre également dans cet article comment n'importe quelle transformation unitaire (qui conserve l'énergie) de profil spatial de faisceau peut être obtenue de manière exacte en utilisant un nombre fini de transformations intermédiaires obtenues par une alternance de structures déphasantes et de transformations de Fourier optiques. Si on s'impose une limite (par exemple une dizaine) au nombre de transformations intermédiaires, la transformation globale obtenue sera plus approximative. Les structures déphasantes modifientt point par point les phases dans la section du faisceau lumineux. Les transformées de Fourier optique peuvent être des lentilles ou des miroirs sphériques mais en pratique une simple propagation du faisceau sur quelques centimètres en espace libre entre deux structures déphasantes peut remplacer les transformées de Fourier optiques dans l'alternance.

L'article précédent donne une recette de conception de systèmes optiques à base d'une succession de structures déphasantes et de propagation libre entre ces structures pour effectuer n'importe quelle transformation unitaire de profil spatial d'un faisceau lumineux cohérent. Une autre recette de conception des différents ensembles de zones déphasantes permettant de faire une transformation désirée a été décrite dans la publication de brevet WO 2012/085046, incorporée ici à titre de référence, soit pour corriger un faisceau qui a subi une transformation de profil soit pour appliquer volontairement à un faisceau une transformation de profil souhaitée. Cette conception des différentes structures déphasantes, plus rapide, plus effficace mais moins générale que celle de l'article précédent, se fait en pratique par simulation dans un ordinateur capable de modéliser le comportement des profils de faisceau dans une succession de différents éléments optiques et notamment des structures déphasantes et des espaces de propagation libre. L'ordinateur simule le passage, dans cette succession d'éléments optiques, d'un faisceau lumineux ayant un profil d'entrée et il calcule le faisceau de sortie qui en résulte. Il fait ensuite interférer ce faisceau de sortie avec un faisceau ayant un profil spatial désiré sur le plan correspondant à une structure déphasante. Le résultat des interférences sur le plan correspondant à chaque structure déphasante est observé et la configuration de la structure est modifiée dans un sens tendant à maximiser les interférences. Cette opération est reconduite sur les structures déphasantes successives et on recommence par itérations successives sur toutes les structures jusqu'à obtenir un faisceau de sortie de profil très proche du faisceau désiré. La configuration finale des structures déphasantes obtenue après ces itérations sert alors à constituer le dispositif de modification de profil spatial qui transforme le premier profil en un second profil désiré, quel qu'il soit.

Des transformations consistant en un multiplexage de plusieurs modes de propagation, c'est-à-dire une transformation de profil spatial de plusieurs modes simples en un mode complexe combinant les profils spatiaux des modes simples, ont été proposées dans l'article précité de G. Labroille. Le composant qui fait cette transformation permet également de faire la transformation inverse (démultiplexage). Plutôt que d'utiliser une succession de structures déphasantes séparées par des espaces libres de propagation, il utilise une multiple réflexion du faisceau entre deux miroirs et un passage du faisceau à chaque fois à travers la même structure déphasante mais dans des portions différentes de celle-ci, chaque portion représentant l'équivalent d'une structure déphasante particulière.

Le composant optique qu'on utilise dans la présente invention et qui réalise à la fois une fonction interne de séparation de modes puis de regroupement de modes est un composant de transformation de profil spatial d'un faisceau réalisé selon les principes qu'on vient de décrire. Il exécute une transformation d'un profil spatial en un autre profil spatial et cette transformation se fait progressivement au cours de plusieurs passages (par exemple une dizaine de passages) du faisceau dans une structure de déphasage optique comportant une matrice de zones déphasantes. Ce passage multiple est obtenu par deux miroirs entre lesquels le faisceau passe en subissant de multiples réflexions, le faisceau passant à chaque fois dans la structure de déphasage optique à différents endroits de celle-ci. Cette structure de déphasage peut être constitué par l'un des miroirs.

Dans la présente invention, le composant optique est conçu pour transformer le profil spatial multimode du faisceau en au moins deux autres profils qui se séparent progressivement au fur et à mesure des passages du faisceau à travers la structure de déphasage ; l'un des profils correspond à un mode ou à un groupe de modes ; l'autre correspond à un autre mode ou un autre groupe de modes ; le premier profil correspond à des modes de propagation plus rapides (par exemple les modes LP01 et LP11) et le deuxième profil correspond à des modes de propagation plus lents (par exemple LP02 et LP21). Le composant optique établit un trajet optique de longueur différente pour chacun des groupes de modes pour allonger le trajet optique suivi par le groupe de modes le plus rapide. Il recombine ensuite, toujours par des passages à travers la structure de déphasage, les deux parties de faisceau (ou plus de deux parties si l'on a divisé le profil initial en plus de deux profils) en un seul faisceau multimode dirigé vers la sortie du composant. Dans ce faisceau multimode, les modes les plus rapides sont ralentis par un trajet optique plus long en espace libre. Ce ralentissement compense le ralentissement des modes les plus lents au cours de leur trajet dans la fibre optique multimode qui relie la source au récepteur. Les trajets de longueur différente et la compensation qui en résulte sont obtenus par le fait que les modes de propagation plus rapides subissent entre les miroirs un nombre de réflexions supérieur au nombre de réflexion subis par les modes de propagation plus lents, par exemple une ou deux réflexions de plus sur une dizaine de réflexions au total. Ceci est rendu possible par le fait que la structure de déphasage donne aux différents modes ou groupes de mode des déflexions différentes, séparant de plus en plus les parties de faisceau comportant des groupes de modes différents. La séparation la plus simple est une divergence progressive des axes de propagation des différentes parties du faisceau. Toutefois on peut aussi envisager une séparation tout en conservant le même axe de propagation, par exemple une séparation du profil spatial du faisceau en deux zones différentes, clairement séparés l'un de l'autre et contenant chacun la moitié de l'énergie du faisceau ; il peut s'agir par exemple d'une séparation en deux lobes géopgraphiquement séparés, ou en une zone centrale de faisceau géographiquement séparée d'une zone annulaire qui l'entoure ; dans ce cas les deux parties du faisceau sont ensuite séparées (par exemple par un miroir renvoyant les deux lobes ou les deux zones concentriques sur des trajets séparés) et elles sont dirigées de manière à subir des nombres de réflexions différents. La conception des différents ensembles de zones déphasantes de la structure de déphasage se fera en deux temps : conception des ensembles de zones déphasantes de la structure pour transformer le profil spatial du faisceau d'entrée en un groupe de deux profils de géométries séparées (axes de propagation différents ou lobes séparés) ; puis conception d'autres ensembles de zones déphasantes pour effectuer la transformation du profil des deux faisceaux séparés en un seul profil regroupé.

Ainsi, si le composant est placé en amont de la fibre optique, il retarde d'une durée connue les modes les plus rapides, après quoi ces modes les plus rapides se propageront dans la fibre et rattraperont leur retard. Inversement, si le composant est placé en aval, il retarde les modes les plus rapides qui ont pris de l'avance sur les modes plus lents. Et si le composant est placé sur le trajet de la fibre à une distance intermédiaire entre la source et le récepteur, il retarde les modes qui ont pris une avance partielle au cours du trajet le long de la première partie de la fibre pour les ramener en arrière des modes plus rapides, suffisamment pour que les modes les plus lents et les modes les plus rapides arrivent ensuite en même temps à l'extrémité de la deuxième partie de la fibre.

Dans ces trois cas, le retard temporel est, autant que possible, égal à la longueur totale de la fibre multipliée par la différence moyenne de vitesse de propagation des deux groupes de modes. Par exemple, une fibre de 1 km de long peut engendrer une différence de temps de propagation de modes de trois nanosecondes, rattrapable par une propagation en espace libre de 10 centimètres.

Il s'agit bien entendu d'un rattrapage approximatif ou partiel d'un groupe de modes par rapport à un autre groupe de modes s'il y a plusieurs modes de propagation excités dans la fibre.

Ce qui a été dit pour une séparation en deux groupes de modes est valable aussi pour une séparation en plus de deux groupes. On notera d'ailleurs que la séparation peut se faire en plusieurs étapes, par exemple une séparation entre un premier groupe et tous les autres groupes, suivie d'une séparation entre les deux premiers groupes et tous les groupes restants, etc. Cela permet d'accumuler plus de retards successifs pour un mode particulier.

Etant donné que l'augmentation de trajet pour les modes les plus rapides est établie en espace libre (non guidé), le décalage temporel introduit par une réflexion supplémentaire entre les miroirs peut être très bien contrôlé, il dépend de la distance entre les miroirs et de l'indice du milieu qui les sépare, ce milieu pouvant être de l'air mais pouvant aussi être un solide transparent d'indice plus élevé que l'air.

Sur la figure 2, le composant optique 10 utilisé dans l'invention comporte une entrée 12 à laquelle peut être connectée une fibre optique multimode MMF1 qui apporte un faisceau F modulé en amplitude par une information numérique. Ce faisceau passe éventuellement par des éléments optiques tels que des lentilles 14, des miroirs réfléchissants 16, des miroirs semi-transparents 18, et arrive sur le couple de miroirs assurant les réflexions multiples.

Dans cet exemple, un premier miroir 20 de ce couple est un miroir sphérique et un deuxième miroir 22 est un miroir globalement plan mais qui est composé, à l'échelle de la longueur d'onde du rayonnement, d'une surface présentant un relief dont les creux et les bosses définissent par leur hauteurs et profondeurs les déphasages relatifs à appliquer aux parties de faisceau qui frappent ces creux et ces bosses. Ces hauteurs et profondeurs par rapport à un plan moyen, sont de l'ordre de la longueur d'onde du faisceau lumineux, allant d'une fraction de longueur d'onde à quelques longueurs d'onde. Typiquement la longueur d'onde est de 1550 nanomètres.

Le miroir 22 joue ici comme on l'a dit non seulement le rôle de miroir pour assurer des trajets multiples du faisceau mais aussi le rôle de structure de déphasage optique du faisceau.

Le faisceau recombiné sortant de l'ensemble de miroirs et ayant subi un premier traitement de modification de son profil spatial (séparation de groupes de modes et nombre de réflexions différentes) puis une recombinaison des différentes parties de faisceau qui ont subi ces modifications est redirigé, par exemple par le miroir semi-transparent 18 et une optique à lentille 24, vers une sortie 26 du composant 10, sortie à laquelle est connectée une fibre de sortie multimode MMF2.

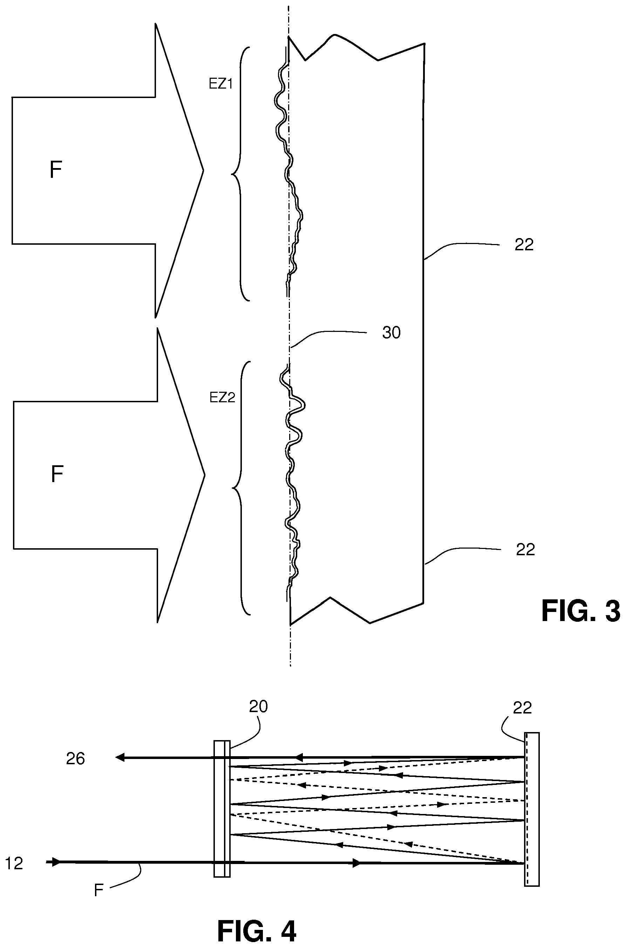

La figure 3 représente un détail à très petite échelle du miroir 22 qui assure la fonction de déphasage et de déflexion des différentes parties de la section du faisceau F. La surface du miroir est structurée et présente un relief de creux et bosses définies par rapport à un plan de référence 30 représentant la surface générale du miroir globalement plan. Les creux et bosses sont des zones déphasantes élémentaires de la structure optique de déphasage que constitue le miroir. Ces zones sont des zones très petites, par exemple de moins d'un micromètre de côté de sorte que le faisceau incident recouvre un de nombreuses zones et chaque portion élémentaire de la section du faisceau subit un déphasage individuel respectif. Les zones sont regroupées en ensembles dont la taille peut être celle de la section du faisceau lumineux ou de l'ordre de cette section, et chaque ensemble établit un motif de déphasages qui induit une transformation intermédiaire désirée pour le profil spatial d'intensités et de phases du faisceau. Lors des réflexions multiples entre les deux miroirs, le faisceau tombe sur différents ensembles configurés pour effectuer chacun une transformation spécifique. La transformation du profil du faisceau pour passer d'un premier profil à un deuxième profil est progressive, par exemple en 7 ou 8 transformations successives. Chaque transformation intermédiaire est obtenue en donnant aux régions déphasantes sur lesquelles doit tomber le faisceau une répartition adéquate de déphasages ponctuels des points de la section du faisceau. La transformation intermédiaire de profil est effective après un trajet du faisceau en espace libre sur quelques centimètres au-delà du passage sur la structure de déphasage. La figure 3 représente deux ensembles EZ1 et EZ2 de zones déphasantes sur lesquelles le faisceau va venir au cours de deux trajets différents entre les miroirs.

Le miroir peut être constitué par une lame structurée par gravure lithographique établissant des creux et bosses de hauteurs ou profondeurs différentes, cette lame étant recouverte d'une fine couche réfléchissante (couche d'or notamment) qui épouse le relief de la structure gravée. Une structure transparente globalement plane, transmissive et non réflexive, également structurée pour établir les déphasages désirés, pourrait également être utilisée entre deux miroirs simples, avec l'inconvénient possible d'une augmentation des pertes d'énergie du faisceau.

Il est à noter que cette structure est figée et doit comporter des profondeurs de gravure calculées pour obtenir l'effet de déphasage et déflexion désirés pour chaque ensemble de zones déphasantes. Une structure commandée (miroirs à commande piézoélectrique ou dispositif à cristaux liquides) pourrait aussi être utilisée dans des cas particuliers.

La figure 4 représente schématiquement le principe général selon lequel le faisceau est divisé en deux parties (mais ce pourrait être plus de deux parties) qui subissent un nombre de réflexions différentes avant d'être regroupées vers la sortie. Sur ce schéma, on a considéré que le miroir 20 est un miroir plan plutôt que sphérique. Pour la lisibilité du schéma, on a considéré qu'il n'y a que deux réflexions sur le miroir 20 pour l'une des parties (en pointillés) du faisceau et trois réflexions (en trait plein) pour l'autre. Dans la pratique il peut y avoir 7 ou 8 réflexions, respectivement 7 pour les modes les plus lents et 8 pour les modes les plus rapides. Par simplification, on a représenté également une déflexion différente des deux portions de faisceau dès la première réflexion sur le miroir 22 mais il est possible que la modification de direction de propagation des deux parties du faisceau n'intervienne significativement qu'après plusieurs réflexions lorsque les modifications de profil spatial du faisceau ont abouti à une séparation suffisamment marquée des différents modes ou groupes de mode initialement mélangés dans le faisceau d'entrée.

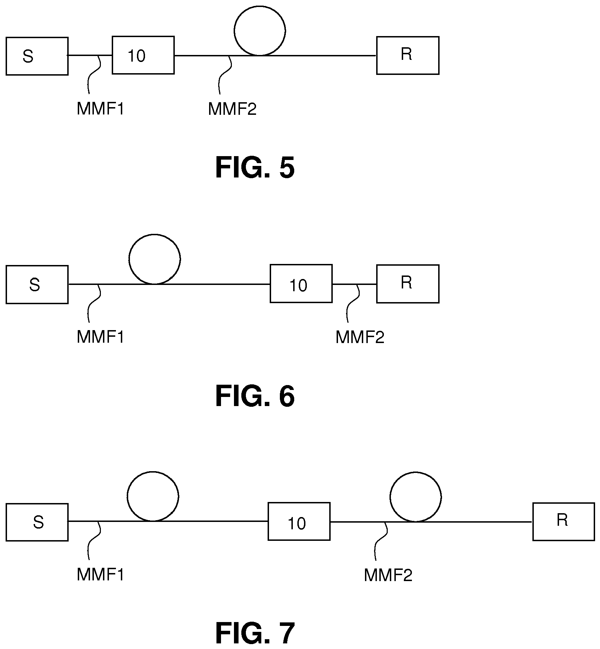

La figure 5 représente l'ensemble du dispositif de communication destiné à transmettre des informations numériques entre une source optique S modulée numériquement par ces informations et un récepteur permettant de décoder l'information numérique transmise. La source S est connectée, soit directement soit par une première fibre optique courte multimode MMF1 à l'entrée du composant optique 10 décrit précédemment. La sortie du composant est connectée à une fibre de sortie multimode MMF2 de grande longueur et celle-ci est reliée au récepteur R. Le composant 10 compense par avance la différence entre la vitesse moyenne de propagation d'un groupe de modes rapides et la la vitesse moyenne de propagation d'un groupe de modes lents dans la fibre MMF2 de sorte que les informations numériques propagés par les différents modes arriveront approximativement en même temps au récepteur. Cette différence de vitesses moyennes est connue ou mesurable en fonction du type de fibre et de sa longueur.

La figure 6 représente une réalisation équivalente dans laquelle le composant 10 est situé à proximité du récepteur et non de la source. C'est donc la première fibre multimode MMF1 qui est longue et la fibre MMF2 qui est courte. La compensation a donc lieu après le trajet dans la fibre longue et non avant et elle concerne évidemment les vitesses de propagation moyenne dans la fibre MMF1 et non MMF2.

La figure 7 représente enfin une réalisation dans laquelle le composant 10 est inséré à une position intermédiaire du trajet entre la source et le récepteur, par exemple au milieu. Les fibres MMF1 et MMF2 sont des fibres longues et le composant 10 compense la somme des influences des différences de vitesse de propagation dans les deux fibres.

## Revendications

1. Dispositif pour compenser la dispersion modale lors de la transmission d'informations par fibre optique multimode, le dispositif étant destiné à être interposé entre une source (S) d'un rayonnement lumineux modulé numériquement par les informations et un récepteur (R) permettant de démoduler ces informations, le dispositif comportant une fibre optique multimode (MMF1, MMF2) et un composant optique (10) de modification de profil spatial de faisceau lumineux placé en amont ou en aval ou inséré en un point intermédiaire de la fibre, ce composant comportant :
- une entrée (12) de réception d'un faisceau lumineux multimode,
- une sortie de faisceau (26),
- au moins deux miroirs (20, 22) permettant une multiple réflexion, et de multiples trajets en espace libre, du faisceau entre les deux miroirs,
- et une structure de déphasage optique, qui peut être l'un des miroirs (22) et qui comporte plusieurs ensembles de multiples zones élémentaires déphasantes, les motifs de déphasages individuels introduits par les zones élémentaires déphasantes dans chaque ensemble engendrant une transformation intermédiaire du profil spatial du faisceau suite au passage du faisceau dans cet ensemble, et les transformations intermédiaires engendrées par plusieurs ensembles se combinant, au cours des passages du faisceau sur la structure de déphasage lors de multiples réflexions entre les miroirs, pour former une transformation globale, dispositif **caractérisé en ce que** la transformation globale comporte :
a) d'abord une séparation du faisceau en plusieurs modes ou groupes de modes de propagation ayant des vitesses de groupe dans des gammes de valeurs différentes, les déflexions engendrées par les ensembles de zones déphasantes étant telles que les parties de faisceau correspondant à un mode ou groupe de modes dont les vitesses de groupe sont dans une première gamme de valeurs subissent, du fait de ces déflexions, un nombre de réflexions sur les miroirs qui n'est pas le même que le nombre de réflexions conférées à d'autres parties du faisceau correspondant à un autre mode ou groupe de modes ayant des vitesses de groupe dans une autre gamme de valeurs,
b) puis un regroupement des différentes parties du faisceau après ces réflexions pour diriger le faisceau vers la sortie du composant.

2. Dispositif selon la revendication 1, **caractérisé en ce que** la structure de déphasage optique est un miroir globalement plan à surface structurée présentant de multiples zones réfléchissantes dont les positions par rapport à un plan moyen du miroir sont écartées de différentes valeurs qui définissent des déphasages élémentaires appliqués aux rayons qui les frappent.

3. Dispositif selon la revendication 2, **caractérisé en ce que** la structure de déphasage optique est l'un des deux miroirs établissant les réflexions multiples.

4. Dispositif selon la revendication 1, **caractérisé en ce que** la structure de déphasage optique est une plaque transparente structurée dont l'épaisseur est modulée zone élémentaire par zone élémentaire en fonction du déphasage à réaliser ponctuellement.

5. Dispositif selon l'une des revendications 1 à 3, **caractérisé en ce que** l'un des miroirs (20) est plan ou sphérique et l'autre (22) est globalement plan, la surface de ce dernier étant éventuellement structurée zone élémentaire par zone élémentaire pour constituer la structure de déphasage optique.

6. Procédé pour compenser la dispersion modale lors de la transmission d'informations par fibre optique multimode entre une source (S) d'un rayonnement lumineux modulé numériquement par les informations et un récepteur (R) permettant de démoduler ces informations, **caractérisé en ce qu'**on insère, en amont ou en aval ou à un point intermédiaire de la fibre, un composant optique (10) de modification de profil spatial de faisceau lumineux qui comporte
- une entrée (12) de réception d'un faisceau lumineux multimode,
- une sortie de faisceau multimode (26),
- au moins deux miroirs (20, 22) permettant une multiple réflexion et de multiples trajets en espace libre du faisceau entre les deux miroirs,
- et une structure de déphasage optique du faisceau, cette structure comportant plusieurs ensembles de multiples zones élémentaires déphasantes, cette structure pouvant être l'un des miroirs,
le procédé incluant une succession de transformations intermédiaires de profil spatial au cours des passages successifs du faisceau dans la structure de déphasage optique, induisant :
a) une séparation du faisceau en plusieurs modes ou groupes de modes de propagation ayant des vitesses de groupe dans des gammes de valeur différentes, les déflexions engendrées par les ensembles de zones déphasantes étant telles que les parties de faisceau correspondant à un mode ou groupe de modes dont les vitesses de groupe sont dans une première gamme de valeurs subissent, du fait de ces déflexions, un nombre de réflexions sur les miroirs qui n'est pas le même que le nombre de réflexions conférées à d'autres parties du faisceau correspondant à un autre mode ou groupe de modes ayant des vitesses de groupe dans une autre gamme de valeurs,
b) puis un regroupement des différentes parties du faisceau après ces réflexions pour diriger le faisceau vers la sortie du composant.

## Patentansprüche

1. Vorrichtung zum Kompensieren der Modendispersion während der Übertragung von Informationen durch eine Multimode-Glasfaser, wobei die Vorrichtung dazu bestimmt ist, zwischen einer Quelle (S) einer digital durch Informationen modulierten Lichtstrahlung, und einem Empfänger (R) zum Demodulieren dieser Informationen angeordnet zu werden, wobei die Vorrichtung eine Multimode-Glasfaser (MMF1, MMF2) und ein, vor oder hinter der Faser positioniertes oder an einem Zwischenpunkt der Faser eingefügtes optisches Bauteil (10) zum Modifizieren des räumlichen Profils des Lichtstrahls umfasst, wobei dieses Bauteil folgendes umfasst:
- einen Eingang (12) zur Aufnahme eines Multimode-Lichtstrahls,
- einen Strahlausgang (26),
- mindestens zwei Spiegel (20, 22), die eine Mehrfachreflexion und mehrere Strahlengänge im freien Raum zwischen den beiden Spiegeln ermöglichen,
- und eine optische Phasenverschiebungsstruktur, die einer der Spiegel (22) sein kann und die mehrere Einheiten vielfacher phasenverschiebender Elementarzonen umfasst, wobei die einzelnen Phasenverschiebungsmuster, die durch die phasenverschiebenden Elementarzonen in jede Einheit eingeführt werden, eine Zwischentransformation des räumlichen Profils des Strahls nach dem Durchgang des Strahls durch diese Einheit auslösen, wobei die Zwischentransformationen durch mehrere, sich bei den Durchgängen des Strahls durch die Phasenverschiebungsstruktur während der Mehrfachreflexionen zwischen den Spiegeln miteinander kombinierende Einheiten ausgelöst werden, um eine globale Transformation zu bilden, wobei die Vorrichtung **dadurch gekennzeichnet ist, dass** die globale Transformation folgendes umfasst:
a) zunächst eine Aufteilung des Strahls in mehrere Ausbreitungsmoden oder Gruppen von Ausbreitungsmoden mit Gruppengeschwindigkeiten in verschiedenen Wertebereichen, wobei die von den Einheiten der phasenverschiebenden Zonen erzeugten Ablenkungen dergestalt sind, dass die Teile des Strahls, die einem Modus oder einer Gruppe von Moden entsprechen, deren Gruppengeschwindigkeiten in einem ersten Wertebereich liegen, durch diese Ablenkungen auf den Spiegeln in einer Anzahl reflektiert werden, die nicht gleich der Anzahl von Reflexionen anderer Teile des Strahls sind, die einem anderen Modus oder einer anderen Gruppe von Moden mit Gruppengeschwindigkeiten in einem anderen Wertebereich entsprechen,
b) dann das Zusammenführen der verschiedenen Teile des Strahls nach diesen Reflexionen, um den Strahl zum Ausgang des Bauteils zu richten.

2. Vorrichtung nach Anspruch 1, **dadurch gekennzeichnet, dass** die optische Phasenverschiebungsstruktur ein generell flacher Spiegel mit einer strukturierten Oberfläche mit mehreren reflektierenden Bereichen ist, deren Positionen in Bezug auf eine Mittelebene des Spiegels um verschiedene Werte beabstandet sind, die die auf die auftreffenden Strahlen angewendeten elementaren Phasenverschiebungen definieren.

3. Vorrichtung nach Anspruch 2, **dadurch gekennzeichnet, dass** die optische Phasenverschiebungsstruktur einer der beiden Spiegel ist, die die Mehrfachreflexionen erzeugen.

4. Vorrichtung nach Anspruch 1, **dadurch gekennzeichnet, dass** die optische Phasenverschiebungsstruktur eine strukturierte transparente Platte ist, deren Dicke von Elementarzone zu Elementarzone im Hinblick auf die vereinzelt durchzuführende Phasenverschiebung moduliert wird.

5. Vorrichtung nach einem der Ansprüche 1 bis 3, **dadurch gekennzeichnet, dass** einer der Spiegel (20) flach oder sphärisch und der andere (22) generell flach ist, wobei die Oberfläche des letzteren nach Elementarzonen strukturiert sein kann, um die optische Phasenverschiebungsstruktur zu bilden.

6. Verfahren zur Kompensation der Modendispersion während der Übertragung von Informationen durch eine Multimode-Glasfaser zwischen einer Quelle (S) einer Lichtstrahlung, die digital durch die Informationen moduliert wird, und einem Empfänger (R) zur Demodulation dieser Informationen, **dadurch gekennzeichnet, dass** man vor, hinter oder an einem Zwischenpunkt der Faser ein optisches Bauteil (10) zur Modifizierung des räumlichen Profils des Lichtstrahls einfügt, das folgendes umfasst:
- einen Eingang (12) zur Aufnahme eines Multimode-Lichtstrahls,
- einen Ausgang des Multimode-Lichtstrahls (26),
- mindestens zwei Spiegel (20, 22), die eine Mehrfachreflexion und mehrere Strahlengänge im freien Raum zwischen den beiden Spiegeln ermöglichen,
- und eine optische Phasenverschiebungsstruktur des Strahls, wobei diese Struktur mehrere Einheiten mit mehreren phasenverschobenen Elementarzonen umfasst, wobei diese Struktur einer der Spiegel sein kann,
wobei das Verfahren eine Folge von Zwischentransformationen des räumlichen Profils während der aufeinanderfolgenden Durchgänge des Strahls durch die optische Phasenverschiebungsstruktur beinhaltet, die folgendes induzieren:
(a) eine Aufteilung des Strahls in mehrere Ausbreitungsmoden oder Gruppen von Ausbreitungsmoden mit Gruppengeschwindigkeiten in unterschiedlichen Wertebereichen, wobei die durch die Einheiten phasenverschiebender Zonen erzeugten Ablenkungen dergestalt sind, dass die Teile des Strahls, die einem Modus oder einer Gruppe von Moden entsprechen, deren Gruppengeschwindigkeiten in einem ersten Wertebereich liegen, infolge dieser Ablenkungen auf den Spiegeln in einer Anzahl reflektiert werden, die nicht der Anzahl von Reflexionen anderer Teile des Strahls entspricht, die einem anderen Modus oder einer Gruppe von Moden mit Gruppengeschwindigkeiten in einem anderen Wertebereich entsprechen,
b) dann das Zusammenführen der verschiedenen Teile des Strahls nach diesen Reflexionen, um den Strahl zum Ausgang des Bauteils zu richten.

## Claims

1. A device for compensating modal dispersion during the transmission of information in a multimode optical fibre, the device being intended to be interposed between a source (S) of a light radiation modulated digitally by the information and a receiver (R) making it possible to demodulate this information, the device comprising a multimode optical fibre (MMF1, MMF2) and an optical component (10) for modifying the spatial profile of the light beam placed upstream or downstream or inserted at an intermediate point of the fibre, this component comprising:
- an input (12) for receiving a multimode light beam,
- a beam output (26),
- at least two mirrors (20, 22) allowing a multiple reflection, and multiple free space paths, of the beam between the two mirrors,
- and an optical phase-shifting structure, which can be one of the mirrors (22) and which comprises several sets of multiple phase-shifting elementary areas, the individual phase-shifting patterns introduced by the phase-shifting elementary areas into each set generating an intermediate transformation of the spatial profile of the beam after the passage of the beam through this set, and the intermediate transformations generated by several sets combining, during the passages of the beam on the phase-shifting structure during multiple reflections between the mirrors, to form a global transformation, **characterised in that** the global transformation comprises:
a) first a separation of the beam into several modes or groups of propagation modes having group speeds in different ranges of values, the deflections generated by the sets of phase-shifting areas being such that the beam portions corresponding to a mode or group of modes whose group speeds are in a first range of values undergo, as a result of these deflections, a number of reflections on the mirrors which is not the same as the number of reflections conferred on other parts of the beam corresponding to another mode or group of modes having group speeds in another range of values,
b) then grouping the different parts of the beam after these reflections to direct the beam towards the output of the component.

2. A device according to claim 1, **characterized in that** the optical phase-shifting structure is a generally flat mirror with a structured surface having multiple reflective areas whose positions relative to a mean plane of the mirror are spaced apart by different values that define elementary phase shifts applied to the rays that strike them.

3. A device according to claim 2, **characterized in that** the optical phase-shifting structure is one of two mirrors establishing the multiple reflections.

4. A device according to claim 1, **characterized in that** the optical phase-shifting structure is a structured transparent plate whose thickness is modulated elementary area per elementary area according to the phase shift to be achieved punctually.

5. A device according to one of claims 1 to 3, **characterized in that** one of the mirrors (20) is flat or spherical and the other one (22) is generally flat, the surface of the latter being optionally structured elementary area per elementary area to constitute the optical phase-shifting structure.

6. A method for compensating modal dispersion during the transmission of information in a multimode optical fibre between a source (S) of light radiation modulated digitally by the information and a receiver (R) for demodulating this information, **characterized in that** an optical component (10) for modifying the spatial profile of the light beam is inserted upstream or downstream or at an intermediate point of the fibre, which comprises
- an input (12) for receiving a multimode light beam,
- a multimode beam output (26),
- at least two mirrors (20, 22) allowing a multiple reflection and multiple free space paths of the beam between the two mirrors,
- and an optical phase-shifting structure of the beam, this structure comprising several sets of multiple phase-shifting elementary areas, this structure possibly being one of the mirrors,
the method including a succession of intermediate transformations of the spatial profile during the successive passages of the beam in the optical phase-shifting structure, inducing:
(a) a separation of the beam into several modes or groups of propagation modes having group speeds in different value ranges, the deflections generated by the sets of phase-shifting areas being such that the parts of the beam corresponding to a mode or group of modes whose group speeds are in a first range of values undergo, as a result of these deflections, a number of reflections on the mirrors which is not the same as the number of reflections conferred to other parts of the beam corresponding to another mode or group of modes having group speeds in a different range of values,
b) then grouping the different parts of the beam after these reflections to direct the beam towards the output of the component.
